# EUROPEAN PATENT SPECIFICATION

(11) **EP 3 803 277 B1**
(45) Date of publication and mention of the grant of the patent: **28.09.2022**
(21) Application number: 18737411.1
(22) Date of filing: 25.05.2018
(51) Int. Cl.: G01D 5/20

(54) **LINEAR POSITION SENSOR**
LINEARER POSITIONSSENSOR
CAPTEUR DE POSITION LINÉAIRE

(30) Priority: 24.05.2018 PT 2018110753
(43) Date of publication of application: 14.04.2021
(73) Proprietor: Bosch Car Multimedia Portugal, S.A., 4705-820 Braga (PT); Universidade do Minho, 4704-553 Braga (PT)
(72) Inventor: KURZ, Andreas, 74003 Heilbronn (DE); FELLA, Sina, 4232 Abstatt (DE); CUNHAL FONTAÍNHAS, José João, 4705-820 Braga (PT); NUNES DOS SANTOS CABRAL, Jorge Miguel, 4710-360 Braga (PT); MACHADO DA ROCHA, Luís Alexandre, 4800-019 Guimarães (PT); AZEVEDO GONÇALVES, José António, 4750-173 Arcozelo BCL (PT); GOMES DE ARAÚJO, Ângelo Rafael, 4730-454 Prado (Santa Maria) (PT)
(74) Representative: Ferreira, Maria Silvina
(86) International application number: PCT/IB2018/053751
(87) International publication number: WO 2019/224585

(56) References cited:
- EP-A2- 2 302 331
- WO-A1-2017/182191
- DE-A1-102008 017 857
- JP-A- H 116 708

## Description

### Technical field

This application relates to a linear position sensor.

### Background art

There are known sensors based on the Eddy current principle. One detection principle, is that the measuring signal is a frequency change of a resonant circuit, whose measuring coil is disposed over an electrically conductive track. The electrically conductive track changes its width along a measuring path in such a way that the area covering the measuring coil in respect to the electrically conductive track along of the measuring path changes. The measuring coil induces Eddy currents in the conductive track, which leads to an inductance change of the measuring coil. DE 102004033083 A1 discloses an arrangement with multiple turns, which improves resolution but has no mechanism to give absolute position, as the turns repeat it is not possible to distinguish the absolute position. Moreover, these turns are based on sine-like shapes, which are difficult to fabricate; moreover, due to the non-linear characteristic of the magnetic flux - that give origin to the Eddy currents - sine-like coil shapes often lead to higher harmonics in the signal, which degrade the sensor response.

Another possibility is that the coupling between two coils is changed by an electrically conductive track such as described in documents WO2017/102137A1, WO2017/198468A1, WO2017/153074A1. All of these measurement principles are based on fixed geometric shapes that are elongated if a longer linear position sensor is desired. Therefore, there is a strong degradation of the resolution of the sensor as the dynamic range increases.

Document JP H11 6708 A discloses a linear position sensor with several coils on both a slider and a scale. Document EP 2 302 331 A1 discloses a linear encoder based on an optical measurement principle. Document DE 10 2008 017857 A1 discloses a rotation position encoder.

### Summary

The present application describes a linear position sensor comprising an element where sensor coils are disposed, and a partly electrically conductive element, both elements are moved relative to each other in a direction along a measurement path. The partly electrically conductive element comprising continuously extending measuring tracks of two typologies, wherein one measuring track is of a triangular shaped type limited by two triangular shapes on both sides along the measurement path, and a second measuring track is of a discrete incremental step type containing discrete increments along the measurement path.

In one embodiment of the linear position sensor, the two triangular shapes on each side of the triangular shaped track are 90° phase-shifted between each other.

In another embodiment of the linear position sensor, the triangular shape of the triangular shaped track is within a linear portion of the discrete incremental step track.

In another embodiment of the linear position sensor, the functional relation between the element with the sensor coils and the partly electrically conductive element implies that the sensor inductive coils are arranged above the measuring tracks, and wherein the overlap between the sensor coils and the measuring tracks changes along the measurement path in such a manner that the inductance of the sensor coils or the coupling between the sensor coils is dependent on the position of the measurement path.

Yet in another embodiment of the linear position sensor, the partly electrically conductive element comprises a triangular shaped track and two discrete incremental step tracks. In this embodiment, the triangular shaped track is placed in between the two discrete incremental step tracks, and the element with the sensor coils is comprised by four sensor coils, two of them aligned with the sides of the triangular shaped track and the other two aligned each one with a discrete incremental step track.

In another embodiment of the linear position sensor, the increments on each discrete incremental step track are equal and 90° phase-shifted between each other.

In another embodiment of the linear position sensor, the partly electrically conductive element is a metallic conductive component.

Yet in another embodiment of the linear position sensor, the measuring tracks are obtained by openings within the partly electrically conductive element.

In another embodiment of the linear position sensor, the partly electrically conductive element comprises a non-conductive support material on top of which the measuring tracks are placed.

Finally in another embodiment of the linear position sensor, the measuring tracks are fabricated on a metallic conductive material.

### General Description

The present technology intends to solve the problem of achieving long linear position sensors with improved resolution and absolute positioning, i.e. to have high-dynamic range linear position sensors with high signal-to-noise ratio (SNR).

According to principles described herein, the linear position sensor now developed is implemented using measuring tracks of two typologies, providing each one fine and coarse resolution measurements. A triangular shaped track is used as target, having two triangular shapes, on both sides of the track, that are 90° phase-shifted between each other. A sensor coil is aligned with each side of the track. The fine resolution is given by the triangular shaped track. The other measuring track typology used is of a discrete incremental step type. A sensor coil is aligned with said track in order to determine the position with coarse resolution.

The relation between both measuring tracks types imposes that one triangular shape - fine resolution - is always within the linear portion of a discrete incremental step track - coarse resolution. This configuration can be extended to multiple triangular shapes within the triangular shaped track, improving longer sensing distance, by increasing the corresponding number of steps within the discrete incremental step tracks, guaranteeing high resolution and high dynamic range. Besides that, using linear tracks - triangular shaped - that are only used within the linear region of a discrete incremental step track, also improves the total linearity of the sensor, as compared to sine-like shapes that typically introduce harmonics resulting in poorer sensor linear responses.

In keeping with these objects and with others which will become apparent hereinafter, one feature of the technology developed resides, briefly stated, on a linear position sensor comprised by an element with sensor coils and a partly electrically conductive element, both elements are moved relative to each other in a direction along a measurement path. The sensor's inductive coils are arranged over the measuring tracks in order to change an overlap between the sensor coils and the measuring tracks along the measurement path in such a manner that the inductance of the sensor coils or the coupling between the sensor coils is dependent on the position of the measurement path.

The measuring tracks can be implemented on a fully metallic piece, i.e. the tracks are obtained by openings within the metallic material or by placing the metallic tracks within a non-metallic holder.

In the view of what is disclosed in the present application, the technology now developed represents an improvement when compared to the state of the art Eddy current sensors. The use of linear tracks (triangular shape) allows not only to minimize the degradation of the resolution of the sensor as the dynamic range of the sensor increases, but also allows to improve the sensor linearity due to the reduction of the harmonics that degrade the sensor response.

### Brief description of drawings

For easier understanding of this application, figures are attached in the annex that represent the forms of implementation which nevertheless are not intended to limit the technique disclosed herein.

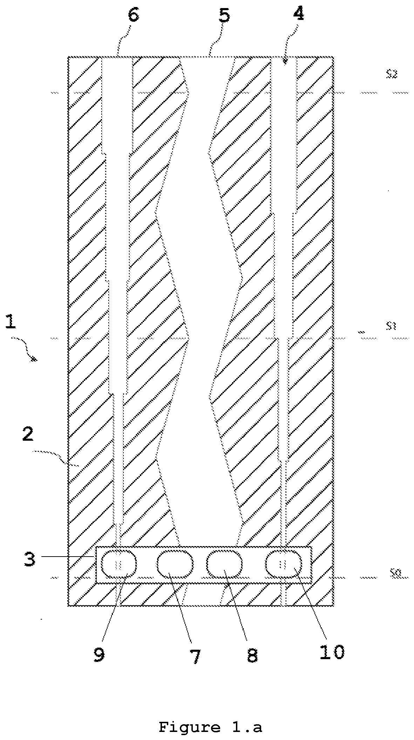

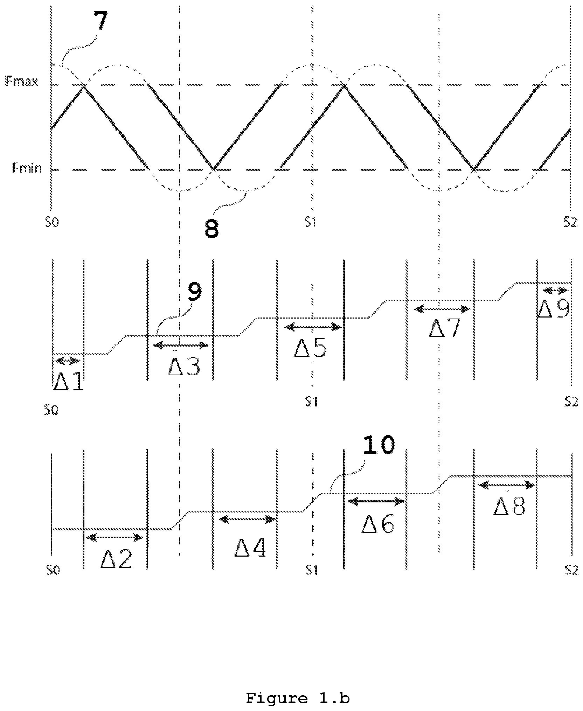

Figure 1.a illustrates one embodiment of the linear sensor position developed, used along a measurement path S0 to S2, in which reference numbers represent:
   1 - linear sensor position;
   2 - partly electrically conductive element;
   3 - element with sensor coils;
   4 - discrete incremental step track;
   5 - triangular shaped track;
   6 - discrete incremental step track;
   7 - sensor coil of the triangular shape track;
   8 - sensor coil of the triangular shape track;
   9 - sensor coil of a discrete incremental step track;
   10 - sensor coil of a discrete incremental step track;
Figure 1.b illustrates the inductance changes, along the measurement path S0 to S2, on the pair of sensor coils (7) and (8) due to the overlap of the triangular shaped track (5), and on the pair of sensor coils (9) and (10) due to the overlap of the discrete incremental step tracks (4) and (6).
Figure 2 illustrates the linear regions of the triangular shaped track responses that are used to calculate the fine position within the coarse positions given by sensor coils (9) and (10), along the measurement path S0 to S2.

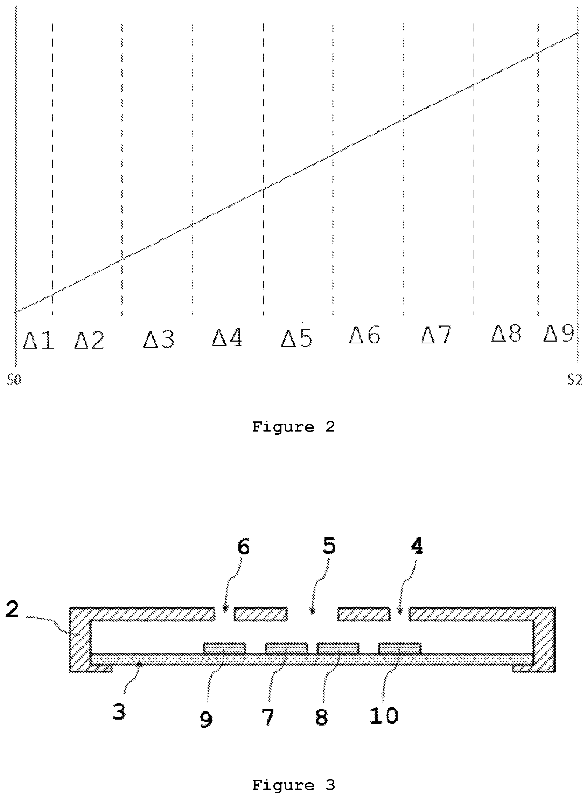

Figure 2 illustrates an embodiment of the linear sensor position developed, in which reference numbers represent:
   2 - partly electrically conductive element;
   3 - element with sensor coils;
   4 - discrete incremental step track;
   5 - triangular shaped track;
   6 - discrete incremental step track;
   7 - sensor coil of the triangular shape track;
   8 - sensor coil of the triangular shape track;
   9 - sensor coil of a discrete incremental step track;
   10 - sensor coil of a discrete incremental step track;

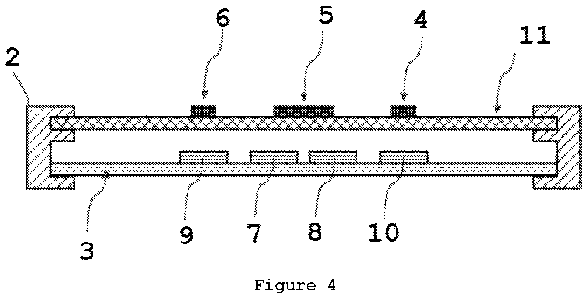

Figure 4 illustrates another embodiment of the linear sensor position developed, in which reference numbers represent:
   2 - partly electrically conductive element;
   3 - element with sensor coils;
   4 - discrete incremental step track;
   5 - triangular shaped track;
   6 - discrete incremental step track;
   7 - sensor coil of the triangular shape track;
   8 - sensor coil of the triangular shape track;
   9 - sensor coil of a discrete incremental step track;
   10 - sensor coil of a discrete incremental step track;
   11 - non-conductive support material.

### Description of embodiments

Now, embodiments of the present application will be described with reference to the annexed drawings. However, they are not intended to limit the scope of this application.

In one embodiment of the linear position sensor (1), as illustrated on Figure 1.a, the sensor (1) is comprised by a an element (3) with sensor coils (7), (8), (9), (10) and a partly electrically conductive element (2), both elements are moved relative to each other in a direction along a measurement path S0 to S2. The sensor's inductive coils are arranged above the measuring tracks (4), (5), (6) in order to change an overlap between the sensor coils (7), (8), (9), (10) and the measuring tracks (4), (5), (6) along the measurement path, in such a manner that the inductance of the sensor coils (7), (8), (9), (10) is dependent on the position of the measurement path. The partly electrically conductive element (2) comprises three measurement tracks: one triangular shaped track (5) possessing two triangular shapes on both sides of the track, with a 90° phase-shift, placed in between two discrete incremental step tracks (4) and (6) containing discrete increments that are equal on both tracks but with a 90° phase-shift.

The inductance changes on the pair of sensor coils (7), (8) and due to the overlap of the respective measuring track (5) generates two quasi-triangular - the vertices are rounded - responses with a 90° phase shift, as can be seen from Figure 1b. The changes on the sensor coils (9) and (10) generated due to the overlap of the measuring tracks (6) and (7), stepped discrete positions that give a very coarse absolute position. As can been seen from Figure 2, the linear regions of the triangular responses are used to calculate the fine position within the nine coarse positions given by sensor coils (9) and (10). The linear position of the partly electrically conductive element (2), which represents the sensor output, is calculated by first identifying the coarse position, and adding the fine position given by the coils (7) or (8), using the position given by the coil signal that is within the interval Fmin<Fr<Fmax, wherein Fr is the resonant frequency.

The coarse position is also used to determine the slope of the linear position given by coils (7) or (8). This position calculation method enables to have high resolutions for long measurement paths, since it is possible to increase the measuring tracks (more triangles and stepped responses), without loss of resolution.

In one embodiment, according to figure 3, the partly electrically conductive element (2) is a metallic conductive component and the tracks are opened on said metallic component. The element (3) with sensor coils is implemented on a PCB - printed circuit board - or alternatively the coils can be manufactured directly on a plastic component using Moulded Interconnect Device Technology (MID) like LDS (laser direct structuring).

On another embodiment, according to figure 4, the measurement path (2) is implemented on a non-conductive support material and the tracks are fabricated of a metallic conductive material.

This description is of course not in any way restricted to the forms of implementation presented herein and any person with an average knowledge of the area can provide many possibilities for modification thereof without departing from the general idea as defined by the claims. The embodiments described above can obviously be combined with each other. The following claims further define forms of implementation.

## Claims

1. Linear position sensor (1) comprising an element (3) where sensor coils (7, 8, 9, 10) are disposed, and a partly electrically conductive element (2), both elements are movable relative to each other in a direction along a measurement path; the partly electrically conductive element comprising continuously extending measuring tracks (4, 5, 6) of two typologies, wherein one measuring track (5) is of a triangularly shaped type, said measuring track (5) being limited by two triangular shapes on both sides along the measurement path, and wherein a second measuring track (4, 6) is of a discrete incremental step type, said second measurement track (4, 6) containing discrete increments along the measurement path.

2. Linear position sensor according to claim 1, wherein the two triangular shapes on each side of the triangularly shaped track are 90° phase-shifted between each other.

3. Linear position sensor according to any of the previous claims, wherein the triangular shape of the triangularly shaped track is within a linear portion of the discrete incremental step track.

4. Linear position sensor according to any of the previous claims, wherein the functional relation between the element with sensor coils and the partly electrically conductive element implies that the sensor inductive coils are arranged above the measuring tracks, and wherein the an overlap between the sensor coils and the measuring tracks changes along the measurement path in such a manner that the inductance of the sensor coils or the coupling between the sensor coils is dependent on the position of the measurement path.

5. Linear position sensor according to any of the previous claims, wherein the partly electrically conductive element comprises a triangularly shaped track and two discrete incremental step tracks, wherein the triangularly shaped track is placed in between the two discrete incremental step tracks, and wherein the element with sensor coils comprises four sensor coils, two of them aligned with the sides of the triangularly shaped track and the other two aligned each one with a discrete incremental step track.

6. Linear position sensor according to claim 5, wherein the increments on each discrete incremental step track are equal and 90° phase-shifted between each other.

7. Linear position sensor according to any of the previous claims, wherein the partly electrically conductive element is a metallic conductive component.

8. Linear position sensor according to claim 7, wherein the measuring tracks are obtained by openings within the partly electrically conductive element.

9. Linear position sensor according to any of the claims 1 to 6, wherein the partly electrically conductive element comprises a non-conductive support material on top of which the measuring tracks are placed.

10. Linear position sensor according to claim 9, wherein the measuring tracks are fabricated on a metallic conductive material.

## Patentansprüche

1. Linearer Positionssensor (1), der ein Element (3) umfasst, in dem Sensorspulen (7, 8, 9, 10) angeordnet sind, sowie ein teilweise elektrisches Leitelement (2), beide Elemente sind relativ zueinander in einer Richtung entlang eines Messpfads beweglich; wobei das teilweise elektrische Leitelement sich kontinuierlich erstreckende Messspuren (4, 5, 6) zweier Typen umfasst, wobei eine Messspur eine (5) Dreiecksform aufweist, wobei die erwähnte Messspur (5) auf beiden Seiten entlang des Messpfads durch zwei Dreiecksformen abgegrenzt ist, und wobei eine zweite Messspur (4, 6) vom Typ der diskreten Inkrementalschritte ist, wobei die erwähnte zweite Messspur (4, 6) diskrete Inkremente entlang der Messspur enthält.

2. Linearer Positionssensor nach Anspruch 1, wobei die beiden Dreiecksformen auf jeder Seite der dreieckig geformten Spur um 90° zueinander phasenverschoben sind.

3. Linearer Positionssensor nach einem der vorhergehenden Ansprüche, wobei sich die dreieckige Form der dreieckig geformten Spur innerhalb eines linearen Abschnitts der diskreten inkrementellen Schrittspur befindet.

4. Linearer Positionssensor nach einem der vorhergehenden Ansprüche, wobei die funktionale Beziehung zwischen dem Element mit den Sensorspulen und dem teilweise elektrischem Leitelement voraussetzt, dass die Sensorinduktionsspulen oberhalb der Messspuren angeordnet sind, und wobei sich die Überlappung zwischen den Sensorspulen und den Messspuren entlang des Messpfads derart ändert, dass die Induktivität der Sensorspulen oder die Kopplung zwischen den Sensorspulen von der Position des Messpfades abhängig ist.

5. Linearer Positionssensor nach einem der vorhergehenden Ansprüche, wobei das teilweise elektrische Leitelement eine dreieckig geformte Spur und zwei diskrete inkrementelle Schrittspuren umfasst, wobei die dreieckig geformte Spur zwischen den zwei diskreten inkrementellen Schrittspuren positioniert wird, und wobei das Element mit den Sensorspulen vier Sensorspulen umfasst, von denen zwei mit den Seiten der dreieckig geformten Spur und die anderen zwei jeweils mit einer diskreten, inkrementellen Schrittspur ausgerichtet sind.

6. Linearer Positionssensor nach Anspruch 5, wobei die Inkremente auf jeder diskreten inkrementellen Schrittspur gleich und um 90° zueinander phasenverschoben sind.

7. Linearer Positionssensor nach einem der vorhergehenden Ansprüche, wobei es sich beim teilweise elektrischen Leitelement um ein metallisches Leitelement handelt.

8. Linearer Positionssensor nach Anspruch 7, wobei die Messspuren mittels Öffnungen innerhalb des teilweise elektrischen leitenden Elements erstellt werden.

9. Linearer Positionssensor nach einem der Ansprüche 1 bis 6, wobei das teilweise elektrische Leitelement ein nicht leitfähiges Trägermaterial umfasst, auf dem die Messspuren positioniert werden.

10. Linearer Positionssensor nach Anspruch 9, wobei die Messspuren aus einem metallischen, leitfähigen Material hergestellt sind.

## Revendications

1. Capteur de position linéaire (1) comprenant un élément (3) où des bobines de détection (7, 8, 9, 10) sont disposées, et un élément partiellement conducteur d'électricité (2), les deux éléments étant mobiles l'un par rapport à l'autre dans une direction le long d'un chemin de mesure ; l'élément partiellement conducteur d'électricité comprenant des pistes de mesure s'étendant en continu (4, 5, 6) de deux typologies, dans lesquelles une piste de mesure (5) est de type de forme triangulaire, ladite piste de mesure (5) étant limitée par deux formes triangulaire sur les deux côtés le long du chemin de mesure, et dans lesquelles une deuxième piste de mesure (4, 6) est d'un type à pas incrémentiels discrets, ladite deuxième piste de mesure (4, 6) contenant des incréments discrets le long du chemin de mesure.

2. Capteur de position linéaire selon la revendication 1, dans lequel les deux formes triangulaires de chaque côté de la piste de forme triangulaire sont déphasées de 90° entre elles.

3. Capteur de position linéaire selon l'une quelconque des revendications précédentes, dans lequel la forme triangulaire de la piste de forme triangulaire est à l'intérieur d'une partie linéaire de la piste à pas incrémentiels discrets.

4. Capteur de position linéaire selon l'une quelconque des revendications précédentes, dans lequel une relation fonctionnelle entre l'élément avec des bobines de détection et l'élément partiellement conducteur d'électricité implique que les bobines inductives de détection sont agencées au-dessus des pistes de mesure, et dans lequel le chevauchement entre les bobines de détection et les pistes de mesure change le long du chemin de mesure d'une manière telle que l'inductance des bobines de détection ou le couplage entre les bobines de détection est dépendant de la position du chemin de mesure.

5. Capteur de position linéaire selon l'une quelconque des revendications précédentes, dans lequel l'élément partiellement conducteur d'électricité comprend une piste de forme triangulaire et deux pistes à pas incrémentiels discrets, dans lequel la piste de forme triangulaire est placée entre les deux pistes à pas incrémentiels discrets, et dans lequel l'élément avec des bobines de détection comprend quatre bobines de détection, deux d'entre elles étant alignées avec les côtés de la piste de forme triangulaire et les deux autres étant alignées chacune avec une piste à pas incrémentiels discrets.

6. Capteur de position linéaire selon la revendication 5, dans lequel les incréments sur chaque piste à pas incrémentiels discrets sont égaux et déphasés de 90° entre eux.

7. Capteur de position linéaire selon l'une quelconque des revendications précédentes, dans lequel l'élément partiellement conducteur d'électricité est un composant métallique conducteur.

8. Capteur de position linéaire selon la revendication 7, dans lequel les pistes de mesures sont obtenues par des ouvertures à l'intérieur de l'élément partiellement conducteur d'électricité.

9. Capteur de position linéaire selon l'une quelconque des revendications 1 à 6, dans lequel l'élément partiellement conducteur d'électricité comprend un matériau de support non conducteur au-dessus duquel les pistes de mesure sont placées.

10. Capteur de position linéaire selon la revendication 9, dans lequel les pistes de mesure sont fabriquées sur un matériau conducteur métallique.
